# EUROPÄISCHE PATENTSCHRIFT

(11) **EP 2 358 793 B1**
(45) Veröffentlichungstag und Bekanntmachung des Hinweises auf die Patenterteilung: **19.09.2012**
(21) Anmeldenummer: 09795377.2
(22) Anmeldetag: 08.12.2009
(51) Int. Cl.: C08G 77/458, C08G 18/61, C08J 9/00

(54) **SILICONHALTIGER POLYURETHANSCHAUM**
POLYURETHANE FOAM CONTAINING SILICONE
MOUSSE DE POLYURÉTHANE SILICONÉE

(30) Priorität: 16.12.2008 DE 102008054774
(43) Veröffentlichungstag der Anmeldung: 24.08.2011
(73) Patentinhaber: Wacker Chemie AG, 81737 München (DE)
(72) Erfinder: CREMER, Jens, 81379 München (DE)
(74) Vertreter: Budczinski, Angelika
(86) Internationale Anmeldenummer: PCT/EP2009/066624
(87) Internationale Veröffentlichungsnummer: WO 2010/069821

(56) Entgegenhaltungen:
- EP-A- 1 485 419
- DE-A1-102006 013 416
- US-A- 4 568 701
- US-A- 4 590 224
- US-A- 5 151 216

## Beschreibung

Die Erfindung betrifft verschäumbare Zubereitungen auf der Basis von Organosiliciumverbindungen, darin enthaltene Siloxane, siliconhaltige Polyurethanschäume mit niedrigen Dichten sowie Verfahren zu deren Herstellung.

Polyurethanschäume werden im Allgemeinen durch Reaktion eines Polyisocyanats mit Verbindungen, die zwei oder mehr aktive Wasserstoffatome enthalten, hergestellt. Die aktiven Wasserstoff enthaltenden Verbindungen sind üblicherweise Polyole, primäre und sekundäre Polyamine sowie Wasser. Zwischen diesen Reaktanden finden während der Herstellung eines Polyurethanschaumes zwei Hauptreaktionen statt. Diese Reaktionen müssen grundsätzlich simultan und mit einer kompetitiv ausgewogenen Rate während des Prozesses ablaufen, um einen Polyurethanschaum mit gewünschten physikalischen Eigenschaften zu erhalten. Die Reaktion zwischen dem Isocyanat und dem Polyol oder Polyamin, die üblicherweise als Gelreaktion bezeichnet wird, führt zu der Bildung eines Polymers mit hohem Molekulargewicht. Der Fortgang dieser Reaktion erhöht die Viskosität des Gemisches und trägt im Allgemeinen zur Quervernetzungsbildung mit polyfunktionellen Polyolen bei. Die zweite Hauptreaktion findet zwischen dem Polyisocyanat und Wasser statt. Diese Reaktion trägt zum Urethan-Polymerwachstum bei und ist für die Bildung von Kohlendioxidgas, welche das Schäumen unterstützt, wichtig. Demzufolge wird diese Reaktion oft als die Treibreaktion bezeichnet. Sowohl die Gel- als auch die Treibreaktionen finden in Schäumen statt, die teilweise oder vollständig mit Kohlendioxidgas getrieben werden. Wenn zum Beispiel die Kohlendioxidentwicklung im Vergleich mit der Gelreaktion zu schnell ist, neigt der Schaum zum Kollabieren. Ist alternativ die Gelausdehnungsreaktion im Vergleich mit der Kohlendioxid erzeugenden Treibreaktion zu schnell, wird der Schaumanstieg begrenzt, was einen Hochdichte-Schaum ergibt. Ebenfalls werden sich schlecht abgestimmte Quervernetzungsreaktionen nachteilig auf die Schaumstabilität auswirken.
Bei den eingesetzten Polyolen handelt es sich im Allgemeinen um Polypropylenglykole, welche gemäß dem Stand der Technik in den verschiedensten Topologien dargestellt werden können und sich voneinander im Molekulargewicht, dem Verzweigungsgrad und der OH-Zahl unterscheiden. Trotz der breiten Strukturvariation dieser Polyole und der damit verbundenen Maßschneiderung der Polyurethanschäume für nahezu jede Anwendung, weisen die kommerziell erhältlichen Polyurethanschäume ihre inhärente Brennbarkeit als gravierenden Nachteil auf. Trotz großer Anstrengungen ist es bisher nicht gelungen absolut unbrennbare PU-Weichschäume im Markt zu etablieren, obwohl es in den letzten Jahrzehnten nicht an intensiven Forschungsaktivitäten gefehlt hat, die Flammverzögerungseigenschaften von Polymerschäumen zu verbessern.

Ein Weg zu brandgehemmten PU-Weichschäumen wird mit den Silicon-Polyurethan-Weichschäumen beschritten. Hierbei wird die, in Standard-PU-Schäumen verwendete, gut brennbare Polyolkomponente durch nicht-brennbare OH-terminierte Siloxane ersetzt. Durch den Einsatz von Silicon-Polyurethan-Copolymeren, d.h. von Polysiloxanen, die auch Polyurethan- und/oder Harnstoffeinheiten enthalten, ist es möglich, derartige unbrennbare Schaumstoffe zu entwickeln, die neue und auf die jeweilige Anwendung genau zugeschnittene Kombinationen von Eigenschaften aufweisen. Hierzu sei beispielsweise auf EP 1485419 B1 verwiesen, worin die Herstellung von Silicon-Polyurethan-Schaumstoffen ausgehend von Alkylamino- oder Alkylhydroxy-terminierten Siliconölen und Diisocyanaten im sog. "One-Shot-Verfahren" beschrieben ist. Des Weiteren beschreibt DE 102006013416 A1 die Herstellung von Silicon-PU-Schäumen aus Prepolymeren, welche auf der Basis von Alkylamino- oder Alkylhydroxy-terminierten Siliconölen und Diisocyanaten in einem lösungsmittelbasierten Prozess hergestellt werden.

Den bisher beschriebenen Silicon-Polyurethanschäumen ist gemein, dass sie auf der Basis von linearen oder nur sehr schwach, aber statistisch in der Seitenketten verzweigte Siloxanen hergestellt werden. Aufgrund dieser linearen Siloxankette findet bei der Verschäumung während der Steigphase kein schneller Molmassenaufbau statt, so dass während der Steigphase nur ein relativ langsamer Viskositätsanstieg erfolgt, wodurch die Polymermatrix auch nach beendeter Treibreaktion in der Regel leicht fließfähig ist und deshalb die feine Zellstruktur vor dem vollständigen Aushärten des Schaumes immer noch kollabieren kann. Selbst wenn nur ein geringer Teil der Zellstruktur in sich zusammenfällt, führt dies zu einer unregelmäßigen und groben Zellverteilung. Um dem Zellkollaps bei Verwendung linearer Polyolkomponenten entgegenzuwirken, dürfen die Verstrebungen zwischen den einzelnen Schaumzellen während der Steigphase einen kritischen Durchmesser nicht unterschreiten. So bleibt gewahrt, dass die noch fließfähige Polymatrix dem drohenden Zusammenfall der Schaumstruktur entgegenwirken kann. Wird jedoch die gewünschte Schaumdichte zu niedrig gewählt, so werden die Zellverstrebungen während der Steigphase immer dünner, bis sie schließlich zu flexibel werden, um die Zellstruktur zu stabilisieren. Dementsprechend werden mit linearen Siloxanen im Allgemeinen nur Silicon-PU-Schäume mit Dichten deutlich oberhalb 100 kg/m³ erhalten.

Hyperverzweigte Polymere sind bereits bekannt und werden z.B. in dem Übersichtsartikel: C.Gao, D.Yan; Prog. Polym. Sci., 2004, 24, 183-275 in Bezug auf Synthese, Eigenschaften und Anwendungen ausführlich diskutiert. Hyperverzweigte Polymere zählen zu dendritischen Makromolekülen und besitzen eine stärkere Verzweigung als konventionell verzweigte Polymere, die hauptsächlich primäre oder sekundäre Zweige an einer linearen Hauptkette aufweisen. Bisher wurden für die Synthese von hyperverweigten Polymeren divergente Synthesemethoden angewandt, wobei ein Monomer, das genau zwei verschiedene Arten funktioneller Gruppen besitzt, die miteinander aber nicht mit sich selbst reagieren, wobei die Funktionalität der Monomere insgesamt größer als zwei ist. Beispiele für geeignete Monomere sind solche, die eine funktionelle Gruppe A und zwei funktionelle Gruppen B besitzen, also ein AB₂-Monomer. Prinzipiell können alle Monomere ABₓ mit x > 1 verwendet werden. Die Verwendung von ABₓ-Monomeren in einer monomolekularen Polymerisation ist jedoch nur dann möglich, wenn die A- und B-Gruppen erst dann miteinander reagieren, wenn es in der Polymersynthese gewünscht ist, also nach Zugabe eines Katalysators oder durch eine Temperaturerhöhung. Alternativ dazu kann deshalb die Synthese von hyperverzweigten Polymeren auch mit zwei verschiedenen Monomertypen erfolgen, die jeweils nur eine Art funktioneller Gruppen, aber in unterschiedlicher Anzahl aufweisen, wie z.B. A₃- und B₂-Bausteine. Durch eine Reaktion dieser beiden A₃- und B₂-Typen lassen sich dann *in situ* A₂B und AB₂-Monomerblöcke erhalten (di-molekulare Polymerisation: allgemein mit Aₓ und By, wobei x>1 und y>2 sind). Solche Verfahren sind allgemein bekannt und z.B. in US-B 6,534,600 beschrieben.

Des Weiteren ist bei den bisher beschriebenen Silicon-PU-Schäumen nachteilig, dass NCO-terminierte Siliconprepolymere eingesetzt werden müssen, wenn Silicon-PU-Schäume mit niedrigen Dichten erhalten werden sollen. Die Herstellung entsprechender Prepolymere ist einerseits mit einem zusätzlichen Syntheseschritt verbunden und anderseits sind solche Prepolymere nur begrenzt lagerstabil, insbesondere bei erhöhten Temperaturen. Wünschenswert wäre demnach ein Verfahren, welche die klassische "One-Shot-Methode" bei der Schaumherstellung nutzbar machen kann. Bei diesem Verfahren würden die Polyol- und Isocyanatkomponente unabhängig voneinander hergestellt und erst bei dem Verschäumungsprozess miteinander zur Reaktion gebracht.

Gegenstand der Erfindung sind Siloxane (A) der Formel

V-(NHC(O)R¹R²)_{p―m-n}(NHC(O)R¹R⁴[SiR₂O]ₐ-SiR₂R⁴R¹H)ₘ(NHC(O)NR⁵₂)ₙ (I),

worin
V einen p-wertigen Kohlenwasserstoffrest, der Heteroatome enthalten kann, bedeutet,
R gleich oder verschieden sein kann und einen einwertigen, gegebenenfalls substituierten Kohlenwasserstoffrest bedeutet,
R¹ gleich oder verschieden sein kann und -O-, -S- oder -NR³- bedeutet,
R² gleich oder verschieden sein kann und Wasserstoffatom und einwertige, gegebenenfalls substituierte Kohlenwasserstoffreste darstellt,
R³ gleich Wasserstoffatom oder einwertiger, gegebenenfalls substituierter Kohlenwasserstoffrest bedeutet,
R⁴ gleich oder verschieden sein kann und einen zweiwertigen, gegebenenfalls substituierten Kohlenwasserstoffrest bedeutet,
R⁵ gleich oder verschieden sein kann und Wasserstoffatom oder einen gegebenenfalls substituierten Kohlenwasserstoffrest bedeutet,
a eine ganze Zahl größer oder gleich 1 bedeutet, bevorzugt 1 bis 1000, besonders bevorzugt 5 bis 500, insbesondere 10 bis 100,
p eine ganze Zahl größer oder gleich 2, bevorzugt 2 bis 20, besonders bevorzugt 3 oder 4, bedeutet,
m eine ganze Zahl größer oder gleich 1, bevorzugt 1 bis 19, besonders bevorzugt 1 bis 3, bedeutet,
n eine ganze Zahl größer oder gleich 1, bevorzugt 1 bis 19, besonders bevorzugt 1 bis 3, bedeutet,
mit der Maßgabe, dass p größer oder gleich m+n ist.

Beispiele für R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der *n*-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α-und der β-Phenylethylrest.

Beispiele für substituierte Kohlenwasserstoffreste R sind Alkoxyalkylenreste, wie Methoxymethylen- und Ethoxymethylenreste, Hydroxyalkylenreste, wie 2-Hydroxyethylenreste, und Aminoalkylenreste, wie Dimethylaminomethylen-, Diethylaminomethylen-, 2-Aminoethylen- und N-Methylaminoethylenreste.

Bevorzugt handelt es sich bei Rest R um einwertige, gegebenenfalls substituierte Kohlenwasserstoffreste mit 1 bis 40 Kohlenstoffatomen, besonders bevorzugt um Kohlenwasserstoffreste mit 1 bis 6 Kohlenstoffatomen, insbesondere um den Methylrest.

Beispiele für R³ sind Wasserstoffatom und die für Rest R angegebenen Beispiele.

Bevorzugt handelt es sich bei Rest R³ um Wasserstoffatom.

Bevorzugt handelt es sich bei R¹ um -O-.

Beispiele für Reste R² sind Wasserstoffatom sowie die für Rest R genannten Beispiele.

Bevorzugt handelt es sich bei Rest R² um Kohlenwasserstoffreste mit 1 bis 6 Kohlenstoffatomen, besonders bevorzugt um den Methylrest.

Beispiele für Rest R⁴ sind Methylen-, Ethylen-, Propylen-, Butylen-, Pentylen-, Hexamethylen-, Methyloxyethylen-, Toluolylen-, Methylen-bis-phenylen-, Phenylen-, Naphtylen-, Cyclohexylen- und Isophoronreste.

Bevorzugt handelt es sich bei R⁴ um zweiwertige, aliphatische Kohlenwasserstoffreste, die mit Heteroatomen unterbrochen sein können, besonders bevorzugt um Propylen-, Methylen- und Methyloxyethylenreste, bevorzugt Methylen- und Methyloxyethylenreste, insbesondere um den Methylenrest.

Beispiele für R⁵ sind die für R angegebenen Beispiele.

Bevorzugt handelt es sich bei R⁵ um Wasserstoffatom, gegebenenfalls mit Hydroxylgruppen substituierte Kohlenwasserstoffreste, besonders bevorzugt um gegebenenfalls mit Hydroxylgruppen substituierte Kohlenwasserstoffreste, insbesondere um Alkylreste mit 1 bis 6 Kohlenstoffatomen und Hydroxyalkylreste mit 1 bis 6 Kohlenstoffatomen.

Beispiele für Rest V sind beliebige, bisher bekannte mehrwertige, aliphatische oder aromatische Kohlenwasserstoffreste, die Heteroatome aufweisen können, wie 1,3,4-Benzolreste, 1,3,5-Cyanuratreste, N,N,N'-Biuretreste, 4,4',4 "-Triphenylmethanreste und Poly((4-phenyl)-co-formaldehyd)reste.

Bevorzugt handelt es sich bei Rest V um mehrwertige Reste mit 1 bis 50 Kohlenstoffatomen, besonders bevorzugt mit 6 bis 30 Kohlenstoffatomen.

Bevorzugt handelt es sich bei V um mehrwertige, aromatische, gegebenenfalls Heteroatome enthaltende Kohlenwasserstoffreste, besonders bevorzugt um mehrwertige aromatische, gegebenenfalls Stickstoff und Sauerstoff enthaltende Kohlenwasserstoffreste, insbesondere um mehrwertige aromatische, gegebenenfalls Stickstoff und Sauerstoff enthaltende Kohlenwasserstoffreste mit 6 bis 30 Kohlenstoffatomen.

In den erfindungsgemäßen Siloxanen (A) der Formel (I) ist die Summe m+n bevorzugt gleich p.

Die erfindungsgemäßen Siloxane (A) der Formel (I) haben eine Viskosität von bevorzugt 100 bis 10 000 mPas, besonders bevorzugt 500 bis 5000 mPas, jeweils bei 25°C und gemessen gemäß ASTM D 4283.

Die erfindungsgemäßen Siloxane (A) sind bevorzugt hyperverzweigt.

Die erfindungsgemäßen Siloxane (A) können nach in der Siliciumchemie gängigen Verfahren hergestellt werden.

Bevorzugt handelt es sich bei den erfindungsgemäßen Siloxanen (A) um solche herstellbar durch Umsetzung von
(i) linearen α,ω-aminoorganylfunktionalisierten oder α,ω-hydroxyorganylfunktionalisierten Siloxanen mit
(ii) Polyisocyanaten und
(iii) Aminen.

Ein weiterer Gegenstand der vorliegenden Erfindung ist ein Verfahren zur Herstellung der Siloxane (A) durch Umsetzung von
(i) linearen α,ω-aminoorganylfunktionalisierten oder α,ω-hydroxyorganylfunktionalisierten Siloxanen mit
(ii) Polyisocyanaten und
(iii) Aminen.

Bei Komponente (i) handelt es sich bevorzugt um Siloxane der Formel

HR¹R⁴[SiR₂O]ₐ-SiR₂R⁴R¹H (II),

wobei R, R¹, R⁴ und a jeweils eine der oben dafür angegebenen Bedeutungen haben.

Beispiele für Komponente (i) sind

HOCH₂-[SiMe₂O]₂₋₁₀₀-SiMe₂CH₂OH,

HOCH₂-CH₂-OCH₂- [SiMe₂O]₂₋₁₀₀-SiMe₂CH₂O-CH₂-CH₂OH,

H₂NCH₂- [SiMe₂O]₂₋₁₀₀-SiMe₂CH₂NH2,

H₂NCH₂-CH₂-CH₂- [SiMe₂O]₂₋₁₀₀-SiMe₂CH₂-CH₂-CH₂NH₂,

H₃C-HNCH₂-CH₂-CH₂- [SiMe₂O]₂₋₁₀₀-SiMe₂CH₂-CH₂-CH₂NH-CH₃,

wobei Me gleich Methylrest ist. In den vorgenannten linearen Siloxanen können herstellungsbedingt bis zu 0,1% aller Einheiten Verzweigungen aufweisen, wie etwa in MeSiO_{3/2}- oder SiO_{4/2}-Einheiten.

Bevorzugt handelt es sich bei Komponente (i) um

HOCH₂- [SiMe₂O]₂₋₁₀₀-SiMe₂CH₂OH,

HOCH₂-CH₂-OCH₂-[SiMe₂O]₂₋₁₀₀-SiMe₂CH₂O-CH₂-CH₂OH,

wobei HOCH₂- [SiMe₂O]₂₋₁₀₀-SiMe₂CH₂OH besonders bevorzugt ist.

Bei den Siloxanen (i) handelt es sich um handelsübliche Produkte bzw. können nach in der Siliciumchemie gängigen Methoden hergestellt werden.

Bei den erfindungsgemäß eingesetzten Polyisocyanaten (ii) handelt es sich um sämtliche bekannte Di- oder Polyisocyanate.

Bevorzugt werden als Polyisocyanate (ii) solche der allgemeinen Formel

V(NCO)ₚ (III)

eingesetzt, wobei
V und p jeweils eine der obengenannten Bedeutungen haben.

Beispiele für Polyisocyanate (ii) sind Diisocyanatodiphenylmethan (MDI), sowohl in Form von rohem oder technischem MDI als auch in Form reiner 4,4'- bzw. 2,4'-Isomeren oder deren Zubereitungen, Tolylendiisocyanat (TDI) in Form seiner verschiedenen Regioisomeren, Diisocyanatonaphthalin (NDI), Isophorondiisocyanat (IPDI), 1,3-Bis(1-isocyanato-1-methylethyl)benzene (TMXDI) oder auch von Hexamethylendiisocyanat (HDI), sowie polymeres MDI (p-MDI), Triphenylmethantriisocyanat oder Biuret - oder Isocyanurattrimerisate der oben genannten Isocyanate.

Polyisocyanate (ii) werden in Mengen von bevorzugt 0,1 bis 30 Gewichtsteilen, besonders bevorzugt 0,1 bis 20 Gewichtsteilen, insbesondere 1 bis 10 Gewichtsteilen, jeweils bezogen auf 100 Gewichtsteile Siloxan (i), eingesetzt.

Bei den erfindungsgemäß eingesetzten Aminen (iii) handelt es sich bevorzugt um solche der Formel

HNR⁵₂ (IV),

wobei R⁵ eine der obengenannten Bedeutungen hat und bevorzugt maximal ein Rest R⁵ die Bedeutung von Wasserstoffatom hat, sowie um aliphatische cyclische Amine und aromatische cyclische Amine, die zusätzliche funktionelle Gruppen wie Thiol-, Hydroxyl- oder weitere Aminogruppen aufweisen können.

Beispiele für Amine (iii) sind Dimethylamin, Diethylamin, Butylamin, Dibutylamin, Diisopropylamin, Pentylamin, Cyclohexylamin, N-Methylcyclohexylamin, Anilin, Morpholin, Pyrrolidin, Piperidin, Imidazol, Piperazin, Ethylendiamin, N,N'-Dimetrylethylendiamin, Ethanolamin, N-Methylethanolamin, Diethanolamin, Propanolamin, Alaniol, N-Methyl(thioethanol)amin.

Bevorzugt handelt es sich bei den Aminen (iii) um aliphatische Amine, besonders bevorzugt um Pyrrolidin, Diethanolamin, Ethanolamin und N-Methylethanolamin, insbesondere um Pyrrolidin, Ethanolamin und N-Methylethanolamin.

Erfindungsgemäß werden Amine (iii) in Mengen von bevorzugt 0,1 bis 20 Gewichtsteilen, besonders bevorzugt 0,1 bis 10 Gewichtsteilen, insbesondere 0,5 bis 5 Gewichtsteilen, jeweils bezogen auf 100 Gewichtsteile Siloxan (i), eingesetzt.

Bei der erfindungsgemäßen Umsetzung der Edukte (i), (ii) und (iii) werden bevorzugt organische Lösungsmittel (iv) und Katalysatoren (v) eingesetzt.

Beispiele für organische Lösungsmittel (iv) sind Ether, insbesondere aliphatische Ether, wie Dimethylether, Diethylether, Methyl-t-butylether, Diisopropylether, Dioxan oder Tetrahydrofuran, Ester, insbesondere aliphatische Ester, wie Ethylacetat oder Butylacetat, Ketone, insbesondere aliphatische Ketone, wie Aceton oder Methylethylketon, sterisch gehinderte Alkohole, insbesondere aliphatische Alkohole, wie t-Butanol, Amide wie DMF, aromatische Kohlenwasserstoffe wie Toluol oder Xylol, aliphatische Kohlenwasserstoffe wie Pentan, Cyclopentan, Hexan, Cyclohexan, Heptan, Chlorkohlenwasserstoffe wie Methylenchlorid oder Chloroform.

Bevorzugt handelt es sich bei den organischen Lösungsmitteln (iv) um aliphatische Ether, aliphatische Ketone oder aliphatische Ester, wobei aliphatische Ketone besonders bevorzugt sind.

Falls organische Lösungsmittel (iv) eingesetzt werden, handelt es sich um Mengen von bevorzugt 1 bis 1000 Gewichtsteilen, besonders bevorzugt 10 bis 500 Gewichtsteilen, insbesondere 30 bis 200 Gewichtsteilen, jeweils bezogen auf 100 Gewichtsteile Siloxan (i). Bei der erfindungsgemäßen Umsetzung werden bevorzugt Lösungsmittel (iv) eingesetzt.

Beispiele für Katalysatoren (v) sind Zinnverbindungen, wie Dibutylzinndilaurat, Dioctylzinndilaurat, Dibutylzinndiacetat, Dibutylzinndioctoat, Dibutylzinn-bis-(dodecylmercaptid), Zinn-(II)-(2-ethylhexanoat) und Zinkverbindungen, wie Zink-(II)-(2-ethylhexanoat) und Bismutverbindungen, wie Bismut(III)-neodecanoat und Zirconiumverbindungen, wie Zirconium-tetrakis(2,2,6,6-tetramethyl-heptane-3,5-dionate) und Amine, wie 1,4-Diazabicyclo[2,2,2]octan.

Bevorzugt handelt es sich bei den Katalysatoren (v) um Zinn-, Zirconium- oder Bismutverbindungen, wobei Bismutverbindungen besonders bevorzugt sind.

Falls Katalysatoren (v) eingesetzt werden, handelt es sich um Mengen von bevorzugt 1 bis 1000 Gew.-ppm, besonders bevorzugt 10 bis 500 Gew.-ppm, insbesondere 50 bis 150 Gew.-ppm, jeweils bezogen auf das Gesamtgewicht des Reaktionsgemischs. Bei der erfindungsgemäßen Umsetzung werden bevorzugt Katalysatoren (v) eingesetzt.

Bei den zur erfindungsgemäßen Umsetzung eingesetzten Komponenten kann es sich jeweils um eine Art einer solchen Komponente wie auch um ein Gemisch aus mindestens zwei Arten einer jeweiligen Komponente handeln.

Bei der erfindungsgemäßen Umsetzung werden bevorzugt in einer ersten Stufe Siloxane (i) mit Polyisocyanaten (ii) gegebenenfalls in Anwesenheit von Lösungsmittel (iv) und gegebenenfalls in Anwesenheit von Katalysator (v) reagieren gelassen und das so erhaltene Reaktionsgemisch in einer zweiten Stufe mit Aminen (iii) umgesetzt.

Die erfindungsgemäße Umsetzung wird bei Temperaturen von bevorzugt 20 bis 100°C, besonders bevorzugt 30 bis 80°C, durchgeführt.

Die erfindungsgemäße Umsetzung wird bevorzugt beim Druck der umgebenden Atmosphäre, also 900 bis 1100 hPa, durchgeführt. Sie kann aber auch bei höheren Drücken, wie etwa bei 1200 bis 10 000 hPa, durchgeführt werden.

Die erfindungsgemäße Umsetzung wird bevorzugt unter Inertgasatmosphäre, wie z.B. Stickstoff und Argon, durchgeführt.

Das nach Beendigung der erfindungsgemäßen Umsetzung erhaltene Reaktionsgemisch kann nach beliebigen und bisher bekannten Verfahren aufgearbeitet werden. Bevorzugt wird dabei das gegebenenfalls eingesetzte organische Lösungsmittel entfernt, was besonders bevorzugt destillativ und - im Rahmen der technischen Möglichkeiten - vollständig erfolgt. Das Reaktionsgemisch enthält bevorzugt keine Edukte mehr. Falls das Reaktionsgemisch noch nicht abreagierte Edukte enthält, verbleiben diese bevorzugt dort.

Die erfindungsgemäßen Organopolysiloxane werden bevorzugt zur Herstellung von verschäumbaren Zubereitungen eingesetzt.

Ein weiterer Gegenstand der Erfindung sind verschäumbare Zusammensetzungen enthaltend Organopolysiloxane (A) und Polyisocyanate (B).

Als erfindungsgemäß eingesetzte Isocyanate (B) können sämtliche bekannten Di- oder Polyisocyanate eingesetzt werden, wie zum Beispiel die oben unter (ii) aufgeführten Isocyanate.

Bevorzugt werden als Polyisocyanate (B) solche der allgemeinen Formel

Q(NCO)_{b} (V)

eingesetzt, wobei
Q einen b-funktionellen, gegebenenfalls substituierten Kohlenwasserstoffrest und
b eine ganze Zahl von mindestens 2, bevorzugt von 2 bis 10, besonders bevorzugt 2 oder 4, insbesondere 2 bis 3, bedeutet.

Vorzugsweise handelt es sich bei Q um gegebenenfalls substituierte Kohlenwasserstoffreste mit 4 bis 30 Kohlenstoffatomen, besonders bevorzugt um Kohlenwasserstoffreste mit 6 bis 25 Kohlenstoffatomen.

Die erfindungsgemäßen Zubereitungen enthalten Isocyanate (B) in Mengen von bevorzugt 0,1 bis 150 Gewichtsteilen, besonders bevorzugt 1 bis 100 Gewichtsteilen, insbesondere 10 bis 50 Gewichtsteilen, jeweils bezogen auf 100 Gewichtsteile Siloxan (A).

Zusätzlich zu den Siloxanen (A) und Polyisocyanaten (B) können die erfindungsgemäßen Zubereitungen weitere Stoffe enthalten, wie z.B. Füllstoffe (C), Emulgatoren (D), physikalische Treibmittel (E), Katalysatoren (F), chemische Treibmittel (G) und Additive (H).

Falls Füllstoffe (C) eingesetzt werden, kann es sich um sämtliche nicht verstärkende Füllstoffe, also Füllstoffe mit einer BET-Oberfläche von bis zu 50 m²/g, wie Kreide, oder verstärkende Füllstoffe, also Füllstoffe mit einer BET-Oberfläche von mindestens 50 m²/g, wie Ruß, gefällte Kieselsäure oder pyrogene Kieselsäure, handeln. Insbesondere hydrophobe wie auch hydrophile pyrogene Kieselsäuren stellen dabei einen bevorzugten Füllstoff dar. In einer besonders bevorzugten Ausführungsform der Erfindung wird eine hydrophobe pyrogene Kieselsäure eingesetzt, deren Oberfläche mit Trimethylsilylgruppen modifiziert worden ist. Die eingesetzten Füllstoffe (C) - insbesondere pyrogene Kieselsäuren - können dabei verschiedene Funktionen wahrnehmen. So können sie zur Einstellung der Viskosität der verschäumbaren Mischung verwendet werden. Vor allem aber können sie während der Verschäumung eine "Stützfunktion" wahrnehmen und so zu Schäumen mit besserer Schaumstruktur führen. Schließlich können auch die mechanischen Eigenschaften der resultierenden Schäume durch den Einsatz von Füllstoffen (C) - insbesondere durch den Einsatz von pyrogener Kieselsäure - entscheidend verbessert werden. Des Weiteren kann als Füllstoff (C) auch Aufblätterungsgraphit zugegeben werden.

Falls die erfindungsgemäßen Zubereitungen Füllstoffe (C) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteilen, jeweils bezogen auf 100 Gewichtsteile Siloxan (A). Die erfindungsgemäßen Zubereitungen enthalten bevorzugt Füllstoffe (C).

In vielen Fällen ist es von Vorteil, den schäumbaren Zubereitungen Emulgatoren (D) zuzugeben. Als geeignete Emulgatoren (D), die auch als Schaumstabilisatoren dienen, können beispielsweise alle handelsüblichen durch Polyetherseitenketten modifizierten Siliconoligomere eingesetzt werden, die auch zur Herstellung von herkömmlichen Polyurethanschäumen eingesetzt werden.

Falls Emulgatoren (D) eingesetzt werden, handelt es sich um Mengen von bevorzugt bis zu 6 Gew.-%, besonders bevorzugt von 0,3 bis 3 Gew.-%, jeweils bezogen auf das Gesamtgewicht der schäumbaren Zubereitungen. Die erfindungsgemäßen Zubereitungen enthalten bevorzugt keine Emulgatoren (D).

Zudem können die erfindungsgemäßen Zubereitungen auch Verbindungen (E) enthalten, die als physikalische Treibmittel dienen können. Als Bestandteil (E) werden bevorzugt niedermolekulare Kohlenwasserstoffe wie z.B. Propan, Butan oder Cyclopentan, Dimethylether, fluorierte Kohlenwasserstoffe wie 1,1-Difluorethan oder 1,1,1,2-Tetrafluorethan oder CO₂ verwendet. Bevorzugt erfolgt die Schaumbildung durch eine Reaktion der Polyisocyanate (B) mit der Komponente (G) als chemischem Treibmittel. Der Einsatz physikalischer Treibmittel (E) in Kombination mit Bestandteil (G) als chemischem Treibmittel kann vorteilhaft sein, um zu Schäumen mit geringerer Dichte zu gelangen.

Falls die erfindungsgemäßen Zubereitungen Bestandteil (E) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteile, jeweils bezogen auf 100 Gewichtsteile Siloxan (A). Die erfindungsgemäßen Zubereitungen enthalten bevorzugt kein physikalisches Treibmittel (E).

Des Weiteren können die erfindungsgemäßen verschäumbaren Zubereitungen Katalysatoren (F) enthalten, die die Schaumhärtung beschleunigen. Als Katalysatoren (F) sind u.a. Organozinnverbindungen geeignet. Beispiele sind Dibutylzinndilaurat, Dioctylzinndilaurat, Dibutylzinndiacetat, Dibutylzinndioctoat, Dibutylzinn-bis-(dodecylmercaptid) oder Zinn(II)-(2-ethylhexanoat). Zudem kommen auch zinnfreie Katalysatoren (F) z.B. Schwermetallverbindungen oder Amine in Frage. Als Beispiel für zinnfreie Katalysatoren sei Eisen(III)-acetylacetonat, Zink(II)-octoat, Zirkonium(IV)-acetylacetonat, Bismut(III)-neodecanoat genannt. Beispiele für Amine sind Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenylamin, Bis-N,N-dimethylaminoethylether, N,N-Dimethyl-2-aminoethanol, N,N-Dimethylaminopyridin, N,N,N,N-Tetramethylbis-(2-Aminoethylmethylamin, 1,5-Diazabicyclo[4.3.0]non-5-en, 1,8-Diazabicyclo[5.4.0]undec-7-en, N-Ethylmorpholin oder N,N'-Dimethylaminopyridin.

Die Katalysatoren (F) können einzeln oder als Gemisch eingesetzt werden. Gegebenenfalls können die bei der Herstellung der Siloxane (A) eingesetzten Katalysatoren gleichzeitig auch als Katalysatoren (F) zur Schaumhärtung dienen.

Falls Katalysator (F) eingesetzt wird, handelt es sich um Mengen von bevorzugt 0,1 bis 6,0 Gew.-%, besonders bevorzugt von 0,1 bis 3,0 Gew.-%, jeweils bezogen auf das Gesamtgewicht der erfindungsgemäßen verschäumbaren Zubereitung. Die erfindungsgemäßen Zubereitungen enthalten bevorzugt Katalysatoren (F).

Als chemische Treibmittel (G) können prinzipiell sowohl Wasser wie auch sämtliche Verbindungen mit bevorzugt mindestens einer gegenüber Isocyanat reaktiven Funktion dienen.

Beispiele für Bestandteil (G) sind aminoalkyl- oder hydroxyfunktionelle Siloxane, die unterschiedlich sind zu Komponente (A), monomere Alkohole, monomere Diole, wie Glycol, Propandiol und Butandiol, monomere Oligoole, wie Pentaerythrit oder Trihydroxymehtylethan, oligomere oder polymere Alkohole mit einer, zwei oder mehreren Hydroxylgruppen, wie Etylen- oder Propylenglykole, Wasser, monomere Amine mit einer, zwei oder mehreren Aminfunktionen, wie Etylendiamin und Hexamethylendiamin, sowie auch oligomere oder polymere Amine mit einer, zwei oder mehreren Aminfunktionen.

Falls Bestandteil (G) eingesetzt wird, handelt es sich bevorzugt um Hydroxyverbindungen, wobei Wasser besonders bevorzugt ist.

Falls Bestandteil (G) eingesetzt wird, handelt es sich um Mengen von bevorzugt 0,1 bis 20 Gewichtsteilen, besonders bevorzugt von 0,1 bis 15 Gewichtsteilen, insbesondere von 0,1 bis 10 Gewichtsteilen, jeweils bezogen auf 100 Gewichtsteile Siloxan (A). Vorzugsweise enthalten die erfindungsgemäßen Zusammensetzungen Bestandteil (G).

Beispiele für gegebenenfalls eingesetzte Additive (H) sind Zellregulantien, Thixotropiermitteln, Weichmacher, Flammschutzmittel, wie z.B. phosphorhaltige Verbindungen, vor allem Phosphate und Phosphonate, sowie auch halogenierte Polyester und Polyole oder Chlorparaffine.

Bevorzugt handelt es sich bei den Additiven (H) um Zellregulantien und Flammschutzmittel, wobei Zellregulantien besonders bevorzugt sind.

Falls Additive (H) eingesetzt werden, handelt es sich um Mengen von bevorzugt 0,1 bis 30 Gewichtsteilen, besonders bevorzugt von 0,1 bis 20 Gewichtsteilen, insbesondere von 0,1 bis 15 Gewichtsteilen, jeweils bezogen auf 100 Gewichtsteile Siloxan (A). Die erfindungsgemäßen Zubereitungen enthalten bevorzugt keine Additive (H).

Bei den erfindungsgemäß eingesetzten Komponenten der verschäumbaren Zubereitung kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zubereitungen um solche enthaltend
(A) Organopolysiloxane,
(B) Polyisocyanate,
   gegebenenfalls
(C) Füllstoffe,
   gegebenenfalls
(D) Emulgatoren,
   gegebenenfalls
(E) physikalische Treibmittel,
   gegebenenfalls
(F) Katalysatoren,
   gegebenenfalls
(G) chemische Treibmittel und
   gegebenenfalls
(H) Additive,
   wobei die erfindungsgemäßen Zubereitungen mindestens ein Treibmittel, ausgewählt aus Komponenten (E) und (G) enthalten, insbesondere mindestens (G).

Die erfindungsgemäßen Zubereitungen enthalten außer der Komponenten (A) und (B) sowie gegebenenfalls einem oder mehreren der Komponenten (C) bis (H) bevorzugt keine weiteren Bestandteile.

Die erfindungsgemäßen Zubereitungen können nun nach beliebigen und an sich bekannten Verfahren, wie einfaches Vermischen der einzelnen Komponenten, hergestellt werden, wobei auch Vormischungen einzelner Bestandteile hergestellt werden können. Dabei werden bevorzugt 2-komponentige Systeme hergestellt, wobei die beiden Komponenten der erfindungsgemäßen verschäumbaren Zubereitung alle Bestandteile in beliebigen Kombinationen und Mengenverhältnissen enthalten, mit der Maßgabe, dass eine Komponente nicht gleichzeitig Siloxane (A) und Polyisocyanate (B) bzw. die Bestandteile (B) und (G) enthält.

So wird z.B. zur Herstellung der erfindungsgemäßen Zubereitung bevorzugt eine Mischung enthaltend Bestandteil (A), gegebenenfalls Bestandteil (C), gegebenenfalls Bestandteil (D), gegebenenfalls Bestandteil (F), gegebenenfalls Bestandteil (G) und gegebenenfalls Bestandteil (H) als Komponente 1 zubereitet sowie eine Komponente 2 enthaltend Bestandteil (B), die dann zur Herstellung des erfindungsgemäßen Schaums miteinander vermischt werden.

Die erfindungsgemäßen Zubereitungen sind bevorzugt flüssig bis zähviskos und haben eine Viskosität von bevorzugt 250 bis 10 000 mPas, besonders bevorzugt 500 bis 5 000 mPas, jeweils bei 25°C und gemessen gemäß ASTM D 4283.

Die erfindungsgemäßen Zubereitungen dienen bevorzugt zur Herstellung von Schäumen, besonders bevorzugt von Hart- oder Weichschäumen, insbesondere von Weichschäumen.

Ein weiterer Gegenstand der vorliegenden Erfindung ist ein Verfahren zur Herstellung siliconhaltiger Polyurethanschäume, dadurch gekennzeichnet, dass erfindungsgemäße Siloxane (A), Polyisocyanat (B) und mindestens ein Treibmittel vermischt und reagieren gelassen werden.

In einer bevorzugten Ausführungsform des erfindungsgemäßen Verfahrens werden Siloxan (A), Polyisocyanat (B), Katalysator (F) und chemisches Treibmittel (G) sowie gegebenenfalls Komponente (C) vermischt und bevorzugt gleichzeitig reagieren gelassen.

Das erfindungsgemäße Verfahren wird bei Starttemperaturen von bevorzugt 0 bis 100°C, besonders bevorzugt 10 bis 40°C, insbesondere 15 bis 30°C, durchgeführt. Die bei der Reaktion entstehende Wärme bleibt bevorzugt im System und trägt zur Schaumbildung bei. Bei dem erfindungsgemäßen Verfahren werden Reaktionstemperaturen bis zu bevorzugt 50 bis 150°C erreicht.

Das erfindungsgemäße Verfahren wird bevorzugt beim Druck der umgebenden Atmosphäre, also etwa 900 bis 1100 hPa, durchgeführt.

Bei dem erfindungsgemäßen Verfahren wird bevorzugt CO₂ freigesetzt, das größtenteils für den Aufbau der erfindungsgemäßen Schaumstruktur verantwortlich ist.

Ein weiterer Gegenstand der Erfindung sind Schäume, herstellbar durch Umsetzung von erfindungsgemäßen Siloxanen (A) mit Polyisocyanat (B) und mindestens einem Treibmittel.

Die erfindungsgemäßen Schäume zeichnen sich durch eine feine, offenzellige Schaumstruktur aus. Ihre mechanischen Eigenschaften entsprechen denen kommerziell verfügbarer PU-Schäume.

Die erfindungsgemäßen Schäume weisen eine Dichte von bevorzugt 10 bis 500 kg/m³, besonders bevorzugt 15 bis 200 kg/m³, insbesondere 20 bis 120 kg/m³, auf, jeweils bestimmt bei 25°C und 1013 hPa.

Die erfindungsgemäßen Schäume können überall dort eingesetzt werden, wo auch bisher Polyurethanschäume eingesetzt worden sind. Insbesondere eignen sie sich für Polsterungen, Wärme- und Geräuschisolierungen.

Die erfindungsgemäßen verschäumbaren Zubereitungen haben den Vorteil, dass sie auf sehr einfache Weise und mit den bisher bekannten Methoden aus der PU-Technologie verarbeitet werden können.

Des Weiteren haben die erfindungsgemäßen Zubereitungen den Vorteil, dass sie mit kommerziell leicht verfügbaren Edukten hergestellt werden können.

Ferner haben die erfindungsgemäßen Zubereitungen den Vorteil, dass sie leicht verarbeitbar sind und niedrigviskos hergestellt werden können.

Die erfindungsgemäßen Zubereitungen haben den Vorteil, dass Silicon-Polyurethanschäume mit geringer Dichte nach dem One-Shot-Verfahren hergestellt werden können.

Das erfindungsgemäße Verfahren zur Herstellung von siliconhaltigen PU-Schäumen hat den Vorteil, dass es einfach in der Durchführung ist.

Des Weiteren haben die erfindungsgemäßen Schäume den Vorteil, dass sie flexibel und äußerst schwer entflammbar sind.

Die erfindungsgemäßen Schäume haben ferner den Vorteil, dass sie hohe mechanische Festigkeiten, insbesondere in Kombination mit geringen Schaumdichten, aufweisen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

**pMDI:** polymeres MDI mit einer Funktionalität von 2,9 (käuflich erhältlich unter der Bezeichnung Lupranat® M70R bei der BASF SE, D-Ludwigshafen);
**Aminkatalysator:** Bis-(2-dimethylaminoethyl)ether (käuflich erhältlich unter der Bezeichnung "Jeffcat^{®} ZF-20" von Huntsman Corp., D-Hamburg); Diazabicyclooctan (käuflich erhältlich unter der Bezeichnung DABCO® Crystal von Air Products GmbH, D-Hamburg)

### Beispiel 1

100,00 g eines linearen Organopolysiloxans der Formel HO-(CH₂)₂-O-(CH₂)-[Si(CH₃)₂-O]₃₂Si(CH₃)₂-(CH₂)-O-(CH₂)₂-OH und 7,0 g pMDI wurden unter einer Argonatmosphäre in 100 ml absolutem Aceton umgesetzt. Die Reaktion wurde mit 30 mg Bismut(III)-neodecanoat katalysiert und bei 50°C gerührt. Nach einer Stunde Reaktionszeit wurden zunächst langsam 1,0 g *Pyrrolidin* gelöst in 10 ml Aceton zugetropft und anschließend das so erhaltene Reaktionsgemisch bei einem Druck von 10 hPa vom Lösungsmittel befreit.

33,0 g des so erhaltenen hyperverzweigten Organopolysiloxans wurden zunächst mit 7,0 g TDI zu einer homogenen Mischung verarbeit und anschließend mit 0,10 g Bis-(2-dimethylaminoethyl)-ether und 0,10 g Diazabicyclooctan als Aminkatalysatoren sowie 0,58 g Wasser durch einen schnelllaufenden Rührer zu einer homogenen Mischung emulgiert. Nach ca. 10 Sekunden setzte eine exotherme Reaktion mit Schaumentwicklung ein. Die Schaumbildung war nach weiteren ca. 40 Sekunden abgeschlossen, während die Wärmeentwicklung noch ca. 5 Minuten anhielt. Es resultierte ein farbloser, flexibler, brandgehemmter Weichschaum mit einer Dichte von 50 kg/m³.

### Vergleichsbeispiel 1

100,00 g eines linearen Organopolysiloxans der Formel HO-(CH₂)₂-O-(CH₂)-[Si(CH₃)₂-O]₃₂Si(CH₃)₂-(CH₂)-O-(CH₂)₂-OH und 5,2 g pMDI wurden unter einer Argonatmosphäre in 100 ml absolutem Aceton umgesetzt. Die Reaktion wurde mit 30 mg Bismut(III)-neodecanoat katalysiert und 1 Stunde bei 50°C gerührt. Im Anschluss daran wurde das Reaktionsgemisch bei einem Druck von 10 hPa vom Lösungsmittel befreit.

32,3 g des so erhaltenen hyperverzweigten Organopolysiloxans wurden zunächst mit 7,7 g TDI zu einer homogenen Mischung verarbeit und anschließend mit 0,10 g Bis-(2-dimethylaminoethyl)-ether und 0,10 g Diazabicyclooctan als Aminkatalysatoren sowie 0,68 g Wasser durch einen schnelllaufenden Rührer zu einer homogenen Mischung emulgiert. Nach ca. 10 Sekunden setzte eine exotherme Reaktion mit Schaumentwicklung ein. Während der Steigphase des Schaums wurde ein Kollabieren der Schaumstruktur festgestellt, so dass kein Weichschaum erhalten werden konnte.

### Beispiel 2

100,00 g eines linearen Organopolysiloxans der Formel HO-(CH₂)₂-O-(CH₂)-[Si(CH₃)₂-O]₃₂Si(CH₃)₂-(CH₂)-O-(CH₂)₂-OH und 7,0 g pMDI wurden unter einer Argonatmosphäre in 100 ml absolutem Aceton umgesetzt. Die Reaktion wurde mit 30 mg Bismut(III)-neodecanoat katalysiert und bei 50°C gerührt. Nach einer Stunde Reaktionszeit wurden zunächst langsam 1,0 g N-Methylethanolamin gelöst in 10 ml Aceton zugetropft und anschließend das so erhaltene Reaktionsgemisch bei einem Druck von 10 hPa vom Lösungsmittel befreit.

32,0 g des so erhaltenen hyperverzweigten Organopolysiloxans wurden zunächst mit 8,0 g TDI zu einer homogenen Mischung verarbeit und anschließend mit 0,10 g Bis-(2-dimethylaminoethyl)-ether und 0,10 g Diazabicyclooctan als Aminkatalysatoren, sowie 0,68 g Wasser durch einen schnelllaufenden Rührer zu einer homogenen Mischung emulgiert. Nach ca. 10 Sekunden setzte eine exotherme Reaktion mit Schaumentwicklung ein. Die Schaumbildung war nach weiteren ca. 40 Sekunden abgeschlossen, während die Wärmeentwicklung noch ca. 5 Minuten anhielt. Es resultierte ein farbloser, flexibler, brandgehemmter Weichschaum mit einer Dichte von 40 kg/m³.

### Beispiel 3

80,00 g eines linearen Organopolysiloxans der Formel HO-(CH₂)₂-O-(CH₂)-[Si(CH₃)₂-O]₃₂Si(CH₃)₂-(CH₂)-O-(CH₂)₂-OH, sowie 20,00 g eines linearen organopolysiloxans der Formel HO-(CH₂)₂-O-(CH₂)-[Si(CH₃)₂-O]₁₂Si(CH₃)₂-(CH₂)-O-(CH₂)₂-OH und 8,0 g pMDI wurden unter einer Argonatmosphäre in 100 ml absolutem Aceton umgesetzt. Die Reaktion wurde mit 30 mg Bismut(III)-neodecanoat katalysiert und bei 50 °C gerührt. Nach einer Stunde Reaktionszeit wurden zunächst langsam 1,0 g N-Methylethanolamin gelöst in 10 ml Aceton zugetropft und anschließend das so erhaltene Reaktionsgemisch bei einem Druck von 10 hPa vom Lösungsmittel befreit.

31,7 g des so erhaltenen hyperverzweigten Organopolysiloxans wurden zunächst mit 8,3 g TDI zu einer homogenen Mischung verarbeit und anschließend mit 0,10 g Bis-(2-dimethylaminoethyl)-ether und 0,10g Diazabicyclooctan als Aminkatalysatoren, sowie 0,68 g Wasser durch einen schnelllaufenden Rührer zu einer homogenen Mischung emulgiert. Nach ca. 10 Sekunden setzte eine exotherme Reaktion mit Schaumentwicklung ein. Die Schaumbildung war nach weiteren ca. 40 Sekunden abgeschlossen, während die Wärmeentwicklung noch ca. 5 Minuten anhielt. Es resultierte ein farbloser, flexibler, brandgehemmter Weichschaum mit einer Dichte von 40 kg/m³.

## Patentansprüche

1. Siloxane (A) der Formel
V-(NHC(O)R¹R²)_{p―m-n}(NHC(O)R¹R⁴[SiR₂O]ₐ-SiR₂R⁴R¹H)ₘ(NHC(O)NR⁵₂)ₙ (I),
worin
V einen p-wertigen Kohlenwasserstoffrest, der Heteroatome enthalten kann, bedeutet,
R gleich oder verschieden sein kann und einen einwertigen, gegebenenfalls substituierten Kohlenwasserstoffrest bedeutet,
R¹ gleich oder verschieden sein kann und -O-, -S- oder -NR³- bedeutet,
R² gleich oder verschieden sein kann und Wasserstoffatom und einwertige, gegebenenfalls substituierte Kohlenwasserstoffreste darstellt,
R³ gleich Wasserstoffatom oder einwertiger, gegebenenfalls substituierter Kohlenwasserstoffrest bedeutet,
R⁴ gleich oder verschieden sein kann und einen zweiwertigen, gegebenenfalls substituierten Kohlenwasserstoffrest bedeutet,
R⁵ gleich oder verschieden sein kann und Wasserstoffatom oder einen gegebenenfalls substituierten Kohlenwasserstoffrest bedeutet,
a eine ganze Zahl größer oder gleich 1 bedeutet,
p eine ganze Zahl größer oder gleich 2 bedeutet,
m eine ganze Zahl größer oder gleich 1 bedeutet,
n eine ganze Zahl größer oder gleich 1 bedeutet,
mit der Maßgabe, dass p größer oder gleich m+n ist.

2. Siloxane gemäß Anspruch 1, **dadurch gekennzeichnet, dass** p gleich m+n ist.

3. Siloxane gemäß Anspruch 1 oder 2, **dadurch gekennzeichnet, dass** es sich bei V um mehrwertige aromatische, gegebenenfalls Stickstoff und Sauerstoff enthaltende Kohlenwasserstoffreste mit 6 bis 30 Kohlenstoffatomen handelt.

4. Siloxane gemäß einem oder mehreren der Ansprüche 1 bis 3, **dadurch gekennzeichnet, dass** es sich um solche handelt herstellbar durch Umsetzung von
(i) linearen oder α,ω-hydroxyorganylfunktionalisierten Siloxanen mit
(ii) Polyisocyanaten und
(iii) Aminen.

5. Verfahren zur Herstellung der Siloxane (A) gemäß einem oder mehreren der Ansprüche 1 bis durch Umsetzung von
(i) linearen a,w-aminoorganylfunktionalisierten oder a,w-hydroxyorganylfunktionalisierten Siloxanen mit
(ii) Polyisocyanaten und
(iii) Aminen.

6. Verschäumbare Zusammensetzungen enthaltend Organopolysiloxane (A) gemäß einem oder mehreren der Ansprüche 1 bis 4 und Polyisocyanate (B).

7. Verschäumbare Zusammensetzungen gemäß Anspruch 6, **dadurch gekennzeichnet, dass** es sich um solche handelt enthaltend
(A) Organopolysiloxane,
(B) Polyisocyanate,
gegebenenfalls
(C) Füllstoffe,
gegebenenfalls
(D) Emulgatoren,
gegebenenfalls
(E) physikalische Treibmittel,
gegebenenfalls
(F) Katalysatoren,
gegebenenfalls
(G) chemische Treibmittel und
gegebenenfalls
(H) Additive,
wobei die erfindungsgemäßen Zubereitungen mindestens ein Treibmittel, ausgewählt aus Komponenten (E) und (G) enthalten, insbesondere mindestens (G).

8. Verfahren zur Herstellung siliconhaltiger Polyurethanschäume, **dadurch gekennzeichnet, dass** Siloxane (A) gemäß einem oder mehreren der Ansprüche 1 bis 4, Polyisocyanat (B) und mindestens ein Treibmittel vermischt und reagieren gelassen werden.

9. Verfahren nach Anspruch 8, **dadurch gekennzeichnet, dass** Siloxan (A) gemäß einem oder mehreren der Ansprüche 1 bis 4, Polyisocyanat (B), Katalysator (F) und chemisches Treibmittel (G) sowie gegebenenfalls Komponente (C) vermischt werden.

10. Schäume, herstellbar durch Umsetzung von Siloxanen (A) gemäß einem oder mehreren der Ansprüche 1 bis 4 mit Polyisocyanat (B) und mindestens einem Treibmittel.

## Claims

1. Siloxanes (A) of the formula
V-(NHC(O)R¹R²)ₚ₋ₘ₋ₙ(NHC(O)R¹R⁴[SiR₂O]ₐ-SiR₂R⁴R¹H)ₘ(NHC(O)NR⁵₂)ₙ (I)
where
V is a p-valent hydrocarbon radical which may contain heteroatoms,
R in each occurrence can be the same or different and is a monovalent, optionally substituted hydrocarbon radical,
R¹ in each occurrence can be the same or different and is -0-, -S- or -NR³-,
R² in each occurrence can be the same or different and represents hydrogen atom and monovalent, optionally substituted hydrocarbon radicals,
R³ is hydrogen atom or monovalent, optionally substituted hydrocarbon radical,
R⁴ in each occurrence can be the same or different and is a divalent, optionally substituted hydrocarbon radical,
R⁵ in each occurrence can be the same or different and is hydrogen atom or an optionally substituted hydrocarbon radical,
a is an integer not less than 1,
p is an integer not less than 2,
m is an integer not less than 1,
n is an integer not less than 1,
with the proviso that p is not less than m+n.

2. Siloxanes according to Claim 1, **characterized in that** p is equal to m+n.

3. Siloxanes according to Claim 1 or 2, **characterized in that** V comprises polyvalent aromatic, optionally nitrogen- and oxygen-containing hydrocarbon radicals having from 6 to 30 carbon atoms.

4. Siloxanes according to one or more of Claims 1 to 3, **characterized in that** they are obtainable by reaction of
(i) linear α,ω-aminoorganyl-functionalized or α,ωhydroxyorganyl-functionalized siloxanes with
(ii) polyisocyanates and
(iii) amines.

5. Process for preparing the siloxanes (A) according to one or more of Claims 1 to 4 by reaction of
(i) linear a,w-aminoorganyl-functionalized or α,ω-hydroxyorganyl-functionalized siloxanes with
(ii) polyisocyanates and
(iii) amines.

6. Foamable compositions containing organopolysiloxanes (A) according to one or more of Claims 1 to 4 and polyisocyanates (B).

7. Foamable compositions according to Claim 6, **characterized in that** they comprise
(A) organopolysiloxanes,
(B) polyisocyanates,
optionally
(C) fillers,
optionally
(D) emulsifiers,
optionally
(E) physical blowing agents,
optionally
(F) catalysts,
optionally
(G) chemical blowing agents, and
optionally
(H) additives,
wherein the preparations according to the invention contain at least one blowing agent selected from components (E) and (G), more particularly at least (G).

8. Process for preparing silicone-containing polyurethane foams, **characterized in that** siloxanes (A) according to one or more of Claims 1 to 4, polyisocyanate (B) and at least one blowing agent are mixed and allowed to react.

9. Process according to Claim 8, **characterized in that** siloxane (A) according to one or more of Claims 1 to 4, polyisocyanate (B), catalyst (F) and chemical blowing agent (G) and also optionally component (C) are mixed.

10. Foams obtainable by reaction of siloxanes (A) according to one or more of Claims 1 to 4 with polyisocyanate (B) and at least one blowing agent.

## Revendications

1. Siloxanes (A) de formule
V-(NHC(O)R¹R²)ₚ₋ₘ₋ₙ(NHC(O)R¹R⁴[SiR₂O]ₐ-SiR₂R⁴R¹H)ₘ(NHC(O)NR⁵₂)ₙ (I),
dans laquelle
V représente un radical hydrocarboné p-valent, qui peut contenir des hétéroatomes,
R peut être le même ou différent et représente un radical hydrocarboné monovalent, éventuellement substitué,
R¹ peut être le même ou différent et représente -O-, - S - ou -NR³-,
R² peut être le même ou différent et représente un atome d'hydrogène et des radicaux hydrocarbonés monovalents éventuellement substitués,
R³ est un atome d'hydrogène ou représente un radical hydrocarboné monovalent, éventuellement substitué,
R⁴ peut être le même ou différent et représente un radical hydrocarboné divalent, éventuellement substitué,
R⁵ peut être le même ou différent et représente un atome d'hydrogène ou un radical hydrocarboné éventuellement substitué,
a représente un nombre entier supérieur ou égal à 1,
p représente un nombre entier supérieur ou égal à 2,
m représente un nombre entier supérieur ou égal à 1,
n représente un nombre entier supérieur ou égal à 1,
étant entendu que p est supérieur ou égal à m+n.

2. Siloxanes selon la revendication 1, **caractérisés en ce que** p est égal à m+n.

3. Siloxanes selon la revendication 1 ou 2, **caractérisés en ce que** V consiste en des radicaux hydrocarbonés aromatiques plurivalents ayant de 6 à 30 atomes de carbone, contenant éventuellement de l'azote et de l'oxygène.

4. Siloxanes selon une ou plusieurs des revendications 1 à 3, **caractérisés en ce qu'**il s'agit de ceux pouvant être préparés par mise en réaction de
(i) siloxanes linéaires à fonctionnalisation a,w-amino-organyle ou a,w-hydroxyorganyle avec
(ii) des polyisocyanates et
(iii) des amines.

5. Procédé pour la préparation des siloxanes (A) selon une ou plusieurs des revendications 1 à 4, par mise en réaction de
(i) siloxanes linéaires à fonctionnalisation α,ω-amino-organyle ou a,w-hydroxyorganyle avec
(ii) des polyisocyanates et
(iii) des amines.

6. Compositions pouvant être transformées en mousse, contenant des organopolysiloxanes (A) selon une ou plusieurs des revendications 1 à 4 et des polyisocyanates (B).

7. Compositions pouvant être transformées en mousse selon la revendication 6, **caractérisées en ce qu'**il s'agit de celles contenant
(A) des organopolysiloxanes,
(B) des polyisocyanates,
éventuellement
(C) des charges,
éventuellement
(D) des émulsifiants,
éventuellement
(E) des agents d'expansion physiques,
éventuellement
(F) des catalyseurs,
éventuellement
(G) des agents d'expansion chimiques et éventuellement
(H) des additifs,
les préparations selon l'invention contenant au moins un agent d'expansion choisi parmi les composants (E) et (G), en particulier au moins (G).

8. Procédé pour la production de mousses de polyuréthane contenant des silicones, **caractérisé en ce qu'**on mélange et fait réagir des siloxanes (A) selon une ou plusieurs des revendications 1 à 4, un polyisocyanate (B) et au moins un agent d'expansion.

9. Procédé selon la revendication 8, **caractérisé en ce qu'**on mélange un siloxane (A) selon une ou plusieurs des revendications 1 à 4, un polyisocyanate (B), un catalyseur (F) et un agent d'expansion chimique (G) ainsi qu'éventuellement un composant (C).

10. Mousses, pouvant être produites par mise en réaction de siloxanes (A) selon une ou plusieurs des revendications 1 à 4 avec un polyisocyanate (B) et au moins un agent d'expansion.
